# FASCICULE DE BREVET EUROPEEN

(11) **EP 2 788 257 B1**
(45) Date de publication et mention de la délivrance du brevet: **24.10.2018**
(21) Numéro de dépôt: 12806570.3
(22) Date de dépôt: 26.11.2012
(51) Int. Cl.: B64G 1/64, F42B 15/38, C06C 5/04, F42B 15/36

(54) **PROCÉDÉ DE RUPTURE PYROTECHNIQUE ET PIÈCES POUR SA MISE NE OEUVRE**
VERFAHREN ZUR PYROTECHNISCHEN TRENNUNG UND BAUTEIL ZU DESSEN DURCHFÜHRUNG
METHOD OF PYROTECHNICAL RUPTURE AND DEVICE FOR ITS ACCOMPLISHMENT

(30) Priorité: 07.12.2011 FR 1103744
(43) Date de publication de la demande: 15.10.2014
(73) Titulaire: ArianeGroup SAS, 75015 Paris (FR)
(72) Inventeur: KISTER, Thomas, F-78740 Vaux Sur Seine (FR); PREAUD, Luc, F-78440 Gargenville (FR)
(74) Mandataire: Gevers & Orès
(86) Numéro de dépôt international: PCT/FR2012/052720
(87) Numéro de publication internationale: WO 2013/083898

(56) Documents cités:
- EP-A1- 2 147 828
- EP-A2- 0 596 400
- FR-A1- 2 861 691
- US-A- 5 372 071

## Description

La présente invention concerne un procédé pour la séparation pyrotechnique de deux éléments solidarisés l'un de l'autre par une pièce de solidarisation à rupture pyrotechnique, ainsi qu'une telle pièce pour la mise en oeuvre de ce procédé.

Bien que non exclusivement appropriée à être utilisée dans les lanceurs spatiaux, l'invention sera ci-après décrite plus particulièrement dans cette application.

On sait que certains éléments des lanceurs spatiaux, tels que des étages adjacents, sont reliés mécaniquement entre eux par une pièce de solidarisation destinée à assurer la transmission des efforts mécaniques entre lesdits éléments tant que cela est nécessaire et pourvue de moyens de rupture pyrotechniques à détonation, intégrés à ladite pièce, aptes à rompre celle-ci suivant un plan de séparation prédéterminé, lorsque lesdits éléments doivent être séparés les uns des autres. Des pièces de solidarisation semblables permettent également la découpe des structures porteuses et des coiffes de protection de satellites à bord des lanceurs.

Dans les procédés de séparation pyrotechnique connus, la rupture de la pièce de solidarisation s'effectue généralement correctement. Cependant, après rupture de la pièce de solidarisation, ces procédés connus n'assurent pas toujours de façon satisfaisante le déboîtement des deux parties rompues de la pièce de solidarisation et l'éloignement des éléments ainsi séparés.

La présente invention a pour objet de remédier à cet inconvénient en dissociant les fonctions de découpe et d'éloignement.

A cette fin, selon l'invention, le procédé pour la rupture pyrotechnique d'une pièce de solidarisation entre deux éléments, pièce de solidarisation :
- qui est destinée à assurer la transmission des efforts mécaniques entre lesdits éléments tant que cela est nécessaire, et
- qui comporte un dispositif de rupture pyrotechnique à cordeau détonant, intégré à ladite pièce de solidarisation et apte à rompre celle-ci suivant un plan de séparation prédéterminé lorsque lesdits éléments doivent être séparés l'un de l'autre,
est remarquable :
- en ce que l'on forme dans ladite pièce de solidarisation, suivant ledit plan de séparation prédéterminé, des zones prédécoupées oblongues espacées les unes des autres de manière à former une suite alternée de telles zones prédécoupées oblongues et de zones non prédécoupées assurant la transmission des efforts mécaniques entre lesdits éléments ; et
- en ce que l'on agence ledit dispositif de rupture pyrotechnique de façon que :
   - dans chacune desdites zones non prédécoupées, ledit dispositif de rupture pyrotechnique comporte une section de cordeau détonant disposée dans un tube à expansion, et
   - dans chacune desdites zones oblongues prédécoupées, ledit dispositif de rupture pyrotechnique comporte une section de cordeau détonant enfermée de façon étanche dans une gaine gonflable.
Ainsi, lorsque le cordeau détonant est mis à feu :
- les sections de cordeau détonant, associées à des tubes à expansion, rompent lesdites zones non prédécoupées, de sorte que ladite pièce de solidarisation est séparée en deux parties le long dudit plan de séparation prédéterminé, et
- les sections de cordeau détonant, associées à des gaines gonflables, gonflent celles-ci avec les gaz qu'elles engendrent, de sorte que lesdites gaines écartent l'une de l'autre lesdites parties de la pièce de solidarisation rompue, et, par conséquent, éloignent l'un de l'autre lesdits éléments dont elles sont respectivement solidaires.

Afin d'augmenter encore cet effet d'écartement produit par les sections de cordeau détonant associées à des gaines gonflables, il est avantageux que, dans les sections du dispositif de rupture pyrotechnique correspondant auxdites zones oblongues prédécoupées de ladite pièce de solidarisation, on dispose, autour de ladite section du cordeau détonant, un cordeau déflagrant enfermé de façon étanche dans ladite gaine gonflable.

Ainsi, à la mise à feu du cordeau détonant, les cordeaux déflagrants sont également mis à feu en produisant une grande quantité de gaz de combustion contribuant au gonflement des gaines gonflables, et, donc, à l'éloignement desdits éléments.

La présente invention concerne également une pièce de solidarisation à rupture pyrotechnique comportant, d'une part, suivant un plan de séparation prédéterminé, une suite alternée de zones prédécoupées oblongues et de zones non prédécoupées assurant la transmission des efforts mécaniques entre lesdits éléments, et, d'autre part, un dispositif de rupture pyrotechnique comprenant :
- dans chacune desdites zones non prédécoupées, une section de cordeau détonant disposée dans un tube à expansion, et
- dans chacune desdites zones oblongues prédécoupées, une section de cordeau détonant enfermée de façon étanche dans une gaine gonflable.

Pour la raison mentionnée ci-dessus, il est avantageux que, dans lesdites zones oblongues prédécoupées de la pièce de solidarisation de l'invention, ledit dispositif de rupture pyrotechnique comporte un cordeau déflagrant qui est enfermé de façon étanche dans ladite gaine gonflable et qui est disposé autour de la section correspondante de cordeau détonant.

Par exemple par le document FR 2 861691, on connaît une pièce de solidarisation à rupture pyrotechnique qui comporte deux ailes délimitant entre elles une gorge dans laquelle est logé un dispositif de rupture pyrotechnique, ladite gorge étant obturée, du côté de l'un desdits éléments, par un fond et, du côté de l'autre desdits éléments, par cet autre élément lui-même, et lesdites ailes comportent, au voisinage dudit fond, des zones de rupture préétablies, définissant un plan de séparation prédéterminé.

Dans le cas de la mise en oeuvre d'une telle pièce de solidarisation connue, dans lesdites zones oblongues prédécoupées, chacune desdites ailes comporte, selon l'invention, une ouverture oblongue au niveau desdites zones de rupture préétablies et dudit fond de la gorge.

Par ailleurs, à toutes fins utiles, on remarquera que :
- le document EP 2 147828 décrit un profilé comportant une suite d'ouvertures oblongues espacées, situées dans des ailes et non pas au niveau de zones de rupture préétablies :
- le document EP 0 596 400 décrit une pièce de solidarisation à rupture pyrotechnique constituée par un corps monolithique creux à l'intérieur duquel est introduit un cordon pyrotechnique ; et
- le document US 5 372 071 décrit une pièce de solidarisation à rupture pyrotechnique dans laquelle le cordon pyrotechnique est disposé dans un soufflet améliorant la séparation des éléments après rupture.

Pour la réalisation de la pièce de solidarisation à rupture pyrotechnique conforme à la présente invention, on peut utiliser un profilé comportant deux ailes délimitant entre elles une gorge qui, d'un côté, est obturée par un fond et, de l'autre, est ouverte, lesdites ailes comportant au voisinage dudit fond des zones de rupture préétablies et chacune desdites ailes comportant une suite d'ouvertures oblongues espacées au niveau desdites zones de rupture préétablies et dudit fond de la gorge et chaque ouverture oblongue d'une desdites ailes se trouvant en regard d'une ouverture oblongue de l'autre desdites ailes.

A un tel profilé est associé, conformément à la présente invention, un dispositif de rupture pyrotechnique à cordon détonant comportant, en alternance, des sections de cordeau détonant disposées chacune dans un tube à expansion et des sections de cordeau détonant enveloppées chacune, de façon étanche, dans une gaine gonflable, ces dernières sections de cordeau détonant pouvant comporter chacune un cordeau déflagrant disposé à l'intérieur de ladite gaine gonflable, autour dudit cordeau détonant.
Les figures du dessin annexé feront bien comprendre comment l'invention peut être réalisée. Sur ces figures, des références identiques désignent des éléments semblables.
La figure 1 illustre schématiquement et partiellement un mode de réalisation du dispositif de rupture pyrotechnique à cordeau détonant conforme à la présente invention.
Les figures 2 et 3 sont respectivement des coupes schématiques selon les lignes II-II et III-III de la figure 1.
La figure 4 est une vue schématique partielle de face d'une pièce de solidarisation conforme à la présente invention, à laquelle le dispositif de rupture pyrotechnique de la figure 1 est intégré.
Les figures 5 et 6 sont respectivement des coupes selon les lignes V-V et VI-VI de la figure 4.
Les figures 7 et 8, qui correspondent respectivement aux figures 5 et 6, illustrent le résultat de la mise à feu du dispositif de rupture pyrotechnique des figures 1 à 3.

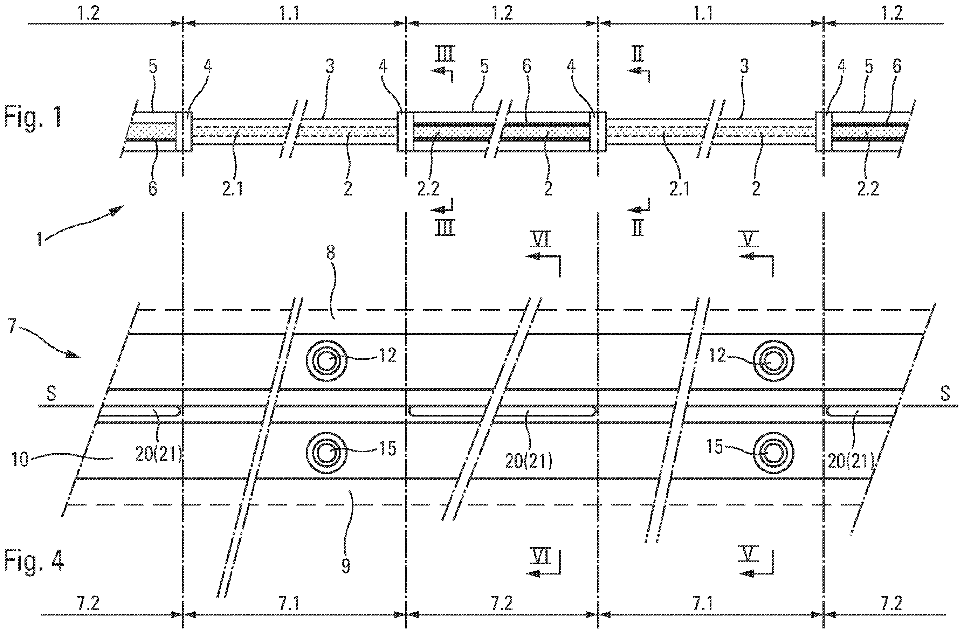

Le dispositif de rupture pyrotechnique 1, conforme à la présente invention et illustré par les figures 1, 2 et 3, comporte un cordeau détonant 2, d'une seule pièce ou formé de plusieurs portions mises bout à bout.

Le long du cordeau détonant 2, le dispositif de rupture pyrotechnique 1 est constitué d'une alternance de section 1.1 et 1.2.

Chaque section 1.1, qui est destinée à provoquer une rupture, comporte une section 2.1 de cordeau détonant 2 enfermée dans un tube à expansion 3.

Chaque section 1.2, qui est destinée à gonfler, comporte une section 2.2 de cordeau détonant 2 enfermée de façon étanche, grâce à des joints 4, dans une gaine gonflable 5. Un cordeau déflagrant 6, disposé autour de la section 2.2 de cordeau détonant, peut de plus être enfermé de façon étanche dans la gaine gonflable 5.

La pièce de solidarisation à rupture pyrotechnique 7, conforme à la présente invention et illustrée par les figures 4, 5, et 6, est destinée à assurer la tenue mécanique entre deux éléments 8 et 9, par exemple des étages consécutifs d'un lanceur spatial, mais à pouvoir être rompue sur commande suivant un plan de séparation prédéterminé S.S.

Cette pièce de solidarisation 7 comporte un profilé 10 pourvu, d'un côté, d'un talon 11 servant à la solidarisation dudit profilé 10 avec l'élément 8 au moyen de boulons 12 et, de l'autre côté, de deux ailes 13 et 14 servant à la solidarisation dudit profilé 10 avec l'élément 9 au moyen de boulons 15.

Les deux ailes 13 et 14 sont au moins approximativement parallèles et elles délimitent entre elles une gorge ouverte 16 obturée, du côté de l'élément 8, par un fond 17 formé au raccord du talon 11 et des ailes 13 et 14 et, du côté de l'élément 9, par cet élément 9 lui-même pénétrant dans l'extrémité ouverte de ladite gorge.

Audit raccord du talon 11 et des ailes 13 et 14, c'est-à-dire au voisinage du fond 17, celles-ci comportent des zones de rupture préétablies 18 et 19, par exemple constituées par des zones de moindre épaisseur, définissant le plan de séparation prédéterminé S-S.

De plus, dans ledit profilé 10, sont formées respectivement dans lesdites ailes 13 et 14, au niveau des zones de rupture préétablies 18, 19 et du plan de séparation prédéterminé, des ouvertures prédécoupées oblongues en regard 20, 21.

Les couples d'ouvertures prédécoupées oblongues 20, 21 sont espacés les uns des autres le long du profilé 10, de sorte que ladite pièce de solidarisation 7 est pourvue d'une alternance de zones non prédécoupées 7.1, assurant la transmission des efforts mécaniques entre les éléments 8 et 9, et de zones prédécoupées oblongues 7.2, chacune délimitée par un couple d'ouvertures oblongues 20, 21.

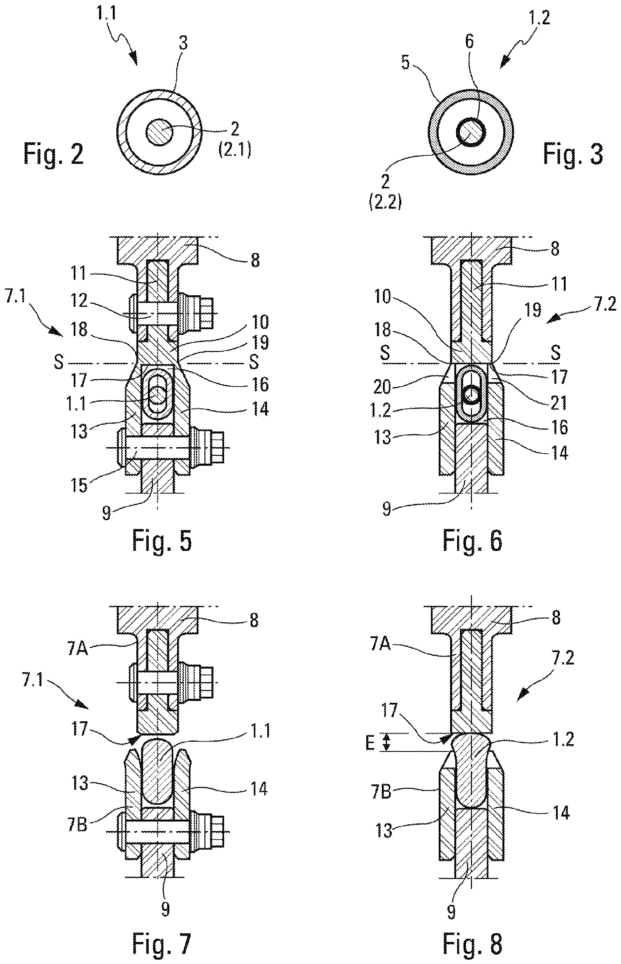

A l'intérieur de la gorge 16 du profilé 10, le dispositif de rupture pyrotechnique 1 est disposé de façon que chacune de ses sections de rupture 1.1 se trouve dans une zone non prédécoupée 7.1 de la pièce de solidarisation et que chacune de ses sections gonflables 1.2 se trouve dans une zone prédécoupée 7.2 de ladite pièce. Comme cela est visible sur les figures 5 et 6, l'introduction du dispositif de rupture pyrotechnique 1 dans la gorge 16 se fait à force, avec déformation desdites sections 1.1 et 1.2 de celui-ci.

Ainsi, à la mise à feu du cordeau détonant 2 :
- les sections de rupture 1.1 du dispositif de rupture pyrotechnique 1 provoquent la découpe des zones non prédécoupées 7.1 de la pièce 7 (voir la figure 7), qui est ainsi découpée en deux pièces 7A et 7B, et
- les sections gonflables 1.2 dudit dispositif de rupture pyrotechnique 1 sont gonflées par les gaz engendrés par les sections 2.2 du cordeau 2 et par les cordeaux déflagrants 6 et provoquent l'écartement E desdites pièces découpées 7A et 7B par appui entre lesdites pièces 7A et 7B (voir la figure 8).

## Revendications

1. Procédé pour la rupture pyrotechnique d'une pièce (7) de solidarisation entre deux éléments (8, 9), pièce de solidarisation :
• qui est destinée à assurer la transmission des efforts mécaniques entre lesdits éléments (8, 9) tant que cela est nécessaire, et
• qui comporte un dispositif de rupture pyrotechnique (1) à cordeau détonant (2), intégré à ladite pièce de solidarisation (7) et apte à rompre celle-ci suivant un plan de séparation prédéterminé (S.S) lorsque lesdits éléments (8, 9) doivent être séparés l'un de l'autre,
**caractérisé :**
- **en ce que** l'on forme dans ladite pièce de solidarisation (7), suivant ledit plan de séparation prédéterminé (S.S), des zones prédécoupées oblongues (7.2) espacées les unes des autres de manière à former une suite alternée de telles zones prédécoupées oblongues (7.2) et de zones non prédécoupées (7.1) assurant la transmission des efforts mécaniques entre lesdits éléments (8.9) ; et
- **en ce que** l'on agence ledit dispositif de rupture pyrotechnique (1) de façon que :
• dans chacune desdites zones non prédécoupées (7.1) de ladite pièce de solidarisation (7), ledit dispositif de rupture pyrotechnique (1) comporte une section (1.1) dans laquelle la section correspondante (2.1) du cordeau détonant est disposée dans un tube à expansion (3), et
• dans chacune desdites zones oblongues prédécoupées (7.2) de ladite pièce de solidarisation (7), ledit dispositif de rupture pyrotechnique (1) comporte une section (1.2) dans laquelle la section correspondante (2.2) du cordeau détonant est enfermée de façon étanche dans une gaine gonflable (5).

2. Procédé selon la revendication 1,
**caractérisé en ce que**, dans les sections (1.2) du dispositif de rupture pyrotechnique (1) correspondant auxdites zones oblongues prédécoupées (7.2) de ladite pièce de solidarisation (7), on dispose, autour de ladite section (2.2) de cordeau détonant, un cordeau déflagrant (6) enfermé de façon étanche dans ladite gaine gonflable (5).

3. Pièce de solidarisation à rupture pyrotechnique pour la solidarisation de deux éléments (8, 9) entre eux, ladite pièce (7) :
• étant destinée à assurer la transmission des efforts mécaniques entre lesdits éléments (8, 9) tant que cela est nécessaire, et
• comportant un dispositif de rupture pyrotechnique (1) à cordeau détonant (2), intégré à ladite pièce de solidarisation (7) et apte à rompre celle-ci suivant un plan de séparation (S.S) prédéterminé lorsque lesdits éléments (8, 9) doivent être séparés l'un de l'autre,
**caractérisée :**
- **en ce que** ladite pièce de solidarisation (7) comporte, suivant ledit plan de séparation prédéterminé (S.S), une suite alternée de zones prédécoupées oblongues (7.2) et de zones non prédécoupées (7.1) assurant la transmission des efforts mécaniques entre lesdits éléments (8, 9) ; et
- **en ce que** ledit dispositif de rupture pyrotechnique (1) comporte :
• dans chacune desdites zones non prédécoupées (7.1), une section de cordeau détonant (2.1) disposée dans un tube à expansion (3), et
• dans chacune desdites zones oblongues prédécoupées (7.2) une section de cordeau détonant (2.2) enfermée de façon étanche dans une gaine gonflable (5).

4. Pièce de solidarisation à rupture pyrotechnique selon la revendication 3,
**caractérisée en ce que**, dans lesdites zones oblongues prédécoupées (7.2), ledit dispositif de rupture pyrotechnique (1) comporte un cordeau déflagrant (6), qui est enfermé de façon étanche dans ladite gaine gonflable (5) et qui est disposé autour de la section correspondante (2.2) du cordeau détonant.

5. Pièce de solidarisation à rupture pyrotechnique selon l'une des revendications 3 ou 4, comportant deux ailes (13, 14) délimitant entre elles une gorge (16) dans laquelle est logé ledit dispositif de rupture pyrotechnique (1), ladite gorge (16) étant obturée, du côté de l'un (8) desdits éléments (8, 9), par un fond (17) et, du côté de l'autre (9) desdits éléments (8, 9) par cet autre élément (9) lui-même, et lesdites ailes (13, 14) comportant, au voisinage dudit fond (17), des zones de rupture préétablies (18, 19), définissant ledit plan de séparation prédéterminé (S.S),
**caractérisée en ce que**, dans lesdites zones oblongues prédécoupées (7, 2), chacune desdites ailes (13, 14) comporte une ouverture oblongue (20, 21) au niveau desdites zones de rupture préétablies (18, 19) et dudit fond (17) de la gorge (16).

6. Profilé pour la pièce à rupture pyrotechnique de la revendication 5, profilé (10) comportant deux ailes (13, 14) délimitant entre elles une gorge (16) qui, d'un côté, est obturée par un fond (17) et, de l'autre, est ouverte, lesdites ailes (13, 14) comportant au voisinage dudit fond (17) des zones de rupture préétablies (18, 19)
**caractérisé en ce que** chacune desdites ailes (13, 14) comporte une suite d'ouvertures oblongues espacées (20, 21) au niveau desdites zones de rupture préétablies (18, 19) et dudit fond (17) de la gorge (16) et **en ce que** chaque ouverture oblongue de l'une desdites ailes se trouve en regard d'une ouverture oblongue de l'autre desdites ailes.

7. Dispositif de rupture pyrotechnique à cordon détonant pour la pièce selon l'une des revendications 3 à 5,
**caractérisé en ce qu'**il comporte, en alternance, des sections (1.1) dans lesquelles le cordeau détonant (2.1) est disposé dans un tube à expansion (3) et des sections (1.2) dans lesquelles le cordeau détonant (2.2) est enveloppé, de façon étanche, dans une gaine gonflable (5).

8. Dispositif de rupture pyrotechnique selon la revendication 7,
**caractérisée en ce que** les sections (1.2) à gaine gonflable (5) comportent chacune un cordeau déflagrant (6) disposé à l'intérieur de ladite gaine gonflable, autour dudit cordeau détonant (2.2).

## Patentansprüche

1. Verfahren zur pyrotechnischen Trennung eines Teils (7) zur festen Verbindung zwischen zwei Elementen (8, 9), ein Teil zur festen Verbindung:
• das dazu bestimmt ist, für die Übertragung der mechanischen Belastungen zwischen den Elementen (8, 9) zu sorgen, solange dies nötig ist, und
• das eine Vorrichtung zur pyrotechnischen Trennung (1) mit Zündschnur (2) aufweist, die in das Teil zur festen Verbindung (7) eingebaut ist und geeignet ist, dieses gemäß einer vorbestimmten Trennungsebene (S.S) zu trennen, wenn die Elemente (8, 9) voneinander getrennt werden müssen,
**dadurch gekennzeichnet, dass**:
- im Teil zur festen Verbindung (7) gemäß der vorbestimmten Trennungsebene (S.S) vorgeschnittene längliche Bereiche (7.2) gebildet werden, die so voneinander beabstandet sind, um eine abwechselnde Folge solcher vorgeschnittener länglicher Bereiche (7.2) und nicht vorgeschnittener Bereiche (7.1) zu bilden, die für die Übertragung von mechanischen Belastungen zwischen den Elementen (8, 9) sorgen; und
- dadurch, dass die Vorrichtung zur pyrotechnischen Trennung (1) so angeordnet wird, dass:
• in jedem der nicht vorgeschnittenen Bereiche (7.1) des Teils zur festen Verbindung (7) die Vorrichtung zur pyrotechnischen Trennung (1) einen Abschnitt (1.1) aufweist, in dem der entsprechende Abschnitt (2.1) der Zündschnur in einem Ausdehnungsrohr (3) bereitgestellt wird, und
• in jedem der vorgeschnittenen länglichen Bereiche (7.2) des Teils zur festen Verbindung (7) die Vorrichtung zur pyrotechnischen Trennung (1) einen Abschnitt (1.2) aufweist, in dem der entsprechende Abschnitt (2.2) der Zündschnur in dichter Form in einer aufblasbaren Ummantelung (5) eingeschlossen ist.

2. Verfahren nach Anspruch 1,
**dadurch gekennzeichnet, dass** in den Abschnitten (1.2) der Vorrichtung zur pyrotechnischen Trennung (1), die den vorgeschnittenen länglichen Bereichen (7.2) des Teils zur festen Verbindung (7) entsprechen, um den Abschnitt (2.2) der Zündschnur herum eine Explosionsschnur (6) in dichter Form in der aufblasbaren Ummantelung (5) eingeschlossen bereitgestellt wird.

3. Teil zur festen Verbindung zur pyrotechnischen Trennung für die feste Verbindung von zwei Elementen (8, 9) miteinander, wobei das Teil (7):
• dazu bestimmt ist, für die Übertragung von mechanischen Belastungen zwischen den Elementen (8, 9) zu sorgen, solange dies nötig ist, und
• eine Vorrichtung zur pyrotechnischen Trennung (1) mit Zündschnur (2) aufweist, die in das Teil zur festen Verbindung (7) eingebaut ist und geeignet ist, dieses gemäß einer vorbestimmten Trennungsebene (S.S) zu trennen, wenn die Elemente (8, 9) voneinander getrennt werden müssen, **dadurch gekennzeichnet, dass**:
- das Teil zur festen Verbindung (7) gemäß der vorbestimmten Trennungsebene (S.S) eine abwechselnde Folge von vorgeschnittenen länglichen Bereichen (7.2) und nicht vorgeschnittenen Bereichen (7.1) aufweist, die für die Übertragung von mechanischen Belastungen zwischen den Elementen (8, 9) sorgen; und
- die Vorrichtung zur pyrotechnischen Trennung (1) aufweist:
• in jedem der nicht vorgeschnittenen Bereiche (7.1), einen Abschnitt einer Zündschnur (2.1), der in einem Ausdehnungsrohr (3) bereitgestellt wird, und
• in jedem der vorgeschnittenen länglichen Bereiche (7.2), einen Abschnitt einer Zündschnur (2.2), dicht in einer aufblasbaren Ummantelung (5) eingeschlossen.

4. Teil zur festen Verbindung zur pyrotechnischen Trennung nach Anspruch 3,
**dadurch gekennzeichnet, dass** in den vorgeschnittenen länglichen Bereichen (7.2) die Vorrichtung zur pyrotechnischen Trennung (1) eine Explosionsschnur (6) aufweist, die in dichter Form in der aufblasbaren Ummantelung (5) eingeschlossen ist und die um den entsprechenden Abschnitt (2.2) der Zündschnur herum bereitgestellt wird.

5. Teil zur festen Verbindung zur pyrotechnischen Trennung nach einem der Ansprüche 3 oder 4, das zwei Flügel (13, 14) aufweist, die zwischen sich eine Nut (16) abgrenzen, in der die Vorrichtung zur pyrotechnischen Trennung (1) aufgenommen ist, wobei die Nut (16) auf Seiten eines (8) der Elemente (8, 9) durch einen Boden (17) und auf Seiten des anderen (9) der Elemente (8, 9) durch dieses andere Element (9) selbst verschlossen ist, und die Flügel (13, 14) in der Nähe des Bodens (17) vorbestimmte Trennbereiche (18, 19) aufweisen, die die vorbestimmte Trennungsebene (S.S) definieren,
**dadurch gekennzeichnet, dass** in den vorgeschnittenen länglichen Bereichen (7.2) jeder der Flügel (13, 14) eine längliche Öffnung (20, 21) auf Höhe der vorbestimmten Trennbereiche (18, 19) und des Bodens (17) der Nut (16) aufweist.

6. Profil für das Teil zur pyrotechnischen Trennung nach Anspruch 5, wobei das Profil (10) zwei Flügel (13, 14) aufweist, die zwischen sich eine Nut (16) abgrenzen, die auf einer Seite von einem Boden (17) verschlossen ist und auf der anderen Seite offen ist, wobei die Flügel (13, 14) in der Nähe des Bodens (17) vorbestimmten Trennbereiche (18, 19) aufweisen, **dadurch gekennzeichnet, dass** jeder der Flügel (13, 14) eine Folge von beabstandeten länglichen Öffnungen (20, 21) auf Höhe der vorbestimmten Trennbereiche (18, 19) und des Bodens (17) der Nut (16) aufweist und dadurch, dass jede längliche Öffnung von einem der Flügel einer länglichen Öffnung des anderen der Flügel zugewandt befindet.

7. Vorrichtung zur pyrotechnischen Trennung mit Zündschnur für das Teil nach einem der Ansprüche 3 bis 5,
**dadurch gekennzeichnet, dass** es abwechselnd Abschnitte (1.1) aufweist, in denen die Zündschnur (2.1) in einem Ausdehnungsrohr (3) bereitgestellt wird, und Abschnitte (1.2), in denen die Zündschnur (2.2) in dichter Form in einer aufblasbaren Ummantelung (5) eingehüllt ist.

8. Vorrichtung zur pyrotechnischen Trennung nach Anspruch 7,
**dadurch gekennzeichnet, dass** die Abschnitte (1.2) der aufblasbaren Ummantelung (5) jeweils eine Explosionsschnur (6) aufweisen, die im Inneren der aufblasbaren Ummantelung um die Zündschnur (2.2) herum bereitgestellt wird.

## Claims

1. Method for the pyrotechnic rupture of a securing component (7) between two elements (8, 9), wherein the securing component:
• is intended to transmit mechanical forces between said elements (8, 9) as required, and
• comprises a pyrotechnic rupture device (1) having a detonating cord (2) which is incorporated into said securing component (7) and able to break the latter along a predetermined separation plane (S.S) when said elements (8, 9) have to be separated from one another,
**characterised:**
- **in that** oblong pre-cut zones (7.2) are formed in said securing component (7), along said predetermined separation plane (S.S), and spaced apart from one another so as to form an alternating sequence of such oblong pre-cut zones (7.2) and non-pre-cut zones (7.1) which transmit mechanical forces between said elements (8, 9); and
- **in that** said pyrotechnic rupture device (1) is arranged such that:
• in each of said non-pre-cut zones (7.1) of said securing component (7), said pyrotechnic rupture device (1) comprises a section (1.1) in which the corresponding section (2.1) of the detonating cord is arranged in an expansion tube (3), and
• in each of said pre-cut oblong zones (7.2) of said securing component (7), said pyrotechnic rupture device (1) comprises a section (1.2) in which the corresponding section (2.2) of the detonating cord is enclosed in a sealed manner in an inflatable sheath (5).

2. Method according to claim 1,
**characterised in that**, in sections (1.2) of the pyrotechnic rupture device (1) corresponding to said pre-cut oblong zones (7.2) of said securing component (7), a deflagrating cord (6) which is enclosed in a sealed manner in said inflatable sheath (5) is arranged around said section (2.2) of detonating cord.

3. Pyrotechnic rupture securing component for securing two elements (8, 9) between them, wherein said component (7):
• is intended to transmit mechanical forces between said elements (8, 9) as required, and
• comprises a pyrotechnic rupture device (1) which has a detonating cord (2), is incorporated into said securing component (7) and able to break the latter along a predetermined separation plane (S.S) when said elements (8, 9) have to be separated from one another,
**characterised:**
- **in that** said securing component (7) comprises, along said predetermined separation plane (S.S), an alternating sequence of oblong pre-cut zones (7.2) and non-pre-cut zones (7.1) which transmit mechanical forces between said elements (8, 9); and
- **in that** said pyrotechnic rupture device (1) comprises:
• in each of said non-pre-cut zones (7.1), a section of detonating cord (2.1) arranged in an expansion tube (3), and
• in each of said pre-cut oblong zones (7.2), a section of detonating cord (2.2) enclosed in a sealed manner in an inflatable sheath (5).

4. Pyrotechnic rupture securing component according to claim 3,
**characterised in that**, in said pre-cut oblong zones (7.2), said pyrotechnic rupture device (1) comprises a deflagrating cord (6) which is enclosed in a sealed manner in said inflatable sheath (5) and which is arranged around the corresponding section (2.2) of the detonating cord.

5. Pyrotechnic rupture securing component according to either claim 3 or claim 4, comprising two wings (13, 14) defining between them a groove (16) in which said pyrotechnic rupture device (1) is housed, said groove (16) being closed, on the side of one (8) of said elements (8, 9), by a bottom (17) and, on the side of the other (9) of said elements (8, 9), by this other element (9) itself, and said wings (13, 14) comprising, in the vicinity of said bottom (17), pre-established rupture zones (18, 19) defining said predetermined separation plane (S.S),
**characterised in that**, in said pre-cut oblong zones (7, 2), each of said wings (13, 14) comprises an oblong opening (20, 21) at the level of said pre-established rupture zones (18, 19) and of said bottom (17) of the groove (16).

6. Profile for the pyrotechnic rupture component from claim 5, the profile comprising two wings (13, 14) defining between them a groove (16) which, on one side, is closed by a bottom (17) and, on the other, is open, said wings (13, 14) comprising in the vicinity of said bottom (17) pre-established rupture zones (18, 19),
**characterised in that** each of said wings (13, 14) comprises a sequence of spaced oblong openings (20, 21) at the level of said pre-established rupture zones (18, 19) and of said bottom (17) of the groove (16), and **in that** each oblong opening of one of said wings is opposite an oblong opening of the other of said wings.

7. Pyrotechnic rupture device having a detonating cord for the component according to any of claims 3 to 5,
**characterised in that** it comprises, alternately, sections (1.1) in which the detonating cord (2.1) is arranged in an expansion tube (3) and sections (1.2) in which the detonating cord (2.2) is enveloped, in a sealed manner, in an inflatable sheath (5).

8. Pyrotechnic rupture device according to claim 7,
**characterised in that** the sections (1.2) having an inflatable sheath (5) each comprise an explosive cord (6) arranged inside said inflatable sheath, around said detonating cord (2.2).
